# DEMANDE DE BREVET EUROPEEN

(11) **EP 4 588 735 A1**
(43) Date de publication de la demande: **23.07.2025**
(21) Numéro de dépôt: 25152166.2
(22) Date de dépôt: 16.01.2025
(51) Int. Cl.: B60T 11/16, B60T 11/26, B62D 25/08

(54) **SOUS-ENSEMBLE TECHNIQUE DE VÉHICULE AUTOMOBILE COMPORTANT UN RÉSERVOIR ADAPTABLE D'UN MAÎTRECYLINDRE DE FREINAGE**

(30) Priorité: 16.01.2024 FR 2400432
(71) Demandeur: Renault s.a.s, 92100 Boulogne Billancourt (FR)
(72) Inventeur: GHIRARDINI, Armand, 78280 GUYANCOURT (FR)

(57) **Abrégé**

L'invention concerne un sous-ensemble technique (10) de véhicule automobile comportant au moins un compartiment moteur (14), délimité par deux longerons longitudinaux (16D, 16G) et un tablier (18), un maître-cylindre de freinage (24), fixé d'un côté ou de l'autre du tablier (18) et surmonté d'un réservoir (26), qui est apte à être agencé, selon son côté de montage, à un élément structurel latéral (20G, 20D), d'au moins un élément structurel transversal (22) ou à proximité d'au moins un premier (28) ou second (30, 32) équipement du compartiment moteur (14) spécifique audit côté, ledit réservoir (26) comportant au moins des parois (36, 38, 50, 52) agencées selon un jeu minimal déterminé à distance des desdits éléments structurels ou à distance des équipements (28, 30, 32), ou résistant au contact direct avec un desdits équipements ou supportant un élément (34) de fixation d'un desdits équipements (28), quel que soit son côté de fixation.

## Description

### Domaine technique de l'invention

L'invention concerne un sous-ensemble technique de véhicule automobile comportant un maître-cylindre de freinage équipé d'un réservoir pouvant être indifféremment mis en oeuvre dans le cadre d'un montage du maître-cylindre à droite ou d'un montage à gauche sur un tablier dudit véhicule.

### Arrière-plan technique

La gestion de la diversité a un coût très important dans le monde automobile en raison des volumes importants de véhicules produits et de la lourdeur des investissements nécessaires réalisés dans l'outil industriel pour pouvoir produire des véhicules différents.

Toutefois certaines diversités sont obligatoires pour pouvoir vendre des véhicules dans certains marchés.

C'est le cas en particulier lorsqu'il s'agit de produire des véhicules adaptés à des côtés de conduite différents, selon les pays dans lesquels ils sont distribués. Certains véhicules sont nécessairement en conduite à droite et d'autres sont nécessairement en conduite à gauche.

L'adaptation d'un véhicule ayant sa direction d'un côté en un véhicule ayant sa direction du côté opposé peut être réalisée de différentes manières et avec un niveau d'impact différent selon les pièces concernées.

En ce qui concerne le poste de conduite, l'adaptation du véhicule entraîne généralement des modifications importantes et inévitables puisque sont concernés le volant, les pédales, les commandes autour du volant, le levier de vitesses, et l'ensemble de la planche de bord.

En ce qui concerne d'autres zones, telles que le compartiment moteur ou la caisse du véhicule, et des organes logés dans ce compartiment ou sous cette caisse, l'adaptation du véhicule entraîne généralement aussi des modifications, mais celles-ci peuvent toutefois être plus ou moins importantes en fonction des choix techniques réalisés.

Par exemple, au cours de cette adaptation, si certains organes changent obligatoirement de côté, comme par exemple la crémaillère de direction, d'autres ne changent pas de côté, soit parce qu'ils ne sont pas affectés par la modification, comme c'est le cas du système de débrayage, soit parce que leur adaptation peut être réalisée au moyen de commandes déportées, comme c'est le cas par exemple du maître-cylindre de freinage qui peut être commandé par un pédalier déporté accouplé au maître-cylindre par des barres de renvoi.

L'utilisation de commandes déportées à barres de renvoi nécessite l'adaptation de ces barres et leur passage d'un côté à l'autre du véhicule, ce qui est synonyme d'une certaine complexité et d'une perte d'espace à l'intérieur de l'habitacle. En outre, les commandes déportées à barres de renvoi sont souvent mal perçues par les utilisateurs, car moins réactives, moins silencieuses et moins performantes que des commandes directes.

En ce qui concerne le pédalier, en particulier, une meilleure solution est d'utiliser un pédalier spécifique à chaque côté de conduite. L'utilisation d'un pédalier spécifique à chaque côté de conduite implique d'agencer le maître-cylindre de freinage qui y est associé du même côté que le pédalier.

Lorsqu'il s'agit d'adapter un véhicule pour conduite à droite en véhicule pour conduite à gauche à partir d'une structure de caisse préexistante, il est donc nécessaire de modifier le tablier pour qu'il puisse accueillir le maître-cylindre du côté opposé à celui initialement prévu. Il n'est, en effet, pas envisageable pour des raisons évidentes de coût de développer un tablier spécifique, car le coût des études d'un nouveau tablier et son industrialisation serait prohibitif.

Or, un tablier n'est pas nécessairement un élément symétrique par rapport au plan médian du compartiment moteur et il peut comporter des surfaces ayant des inclinaisons différentes par rapport à la verticale selon qu'elles sont placées à droite ou à gauche. Ceci conduit à une inclinaison différente du maître-cylindre selon qu'il est monté sur la droite ou sur la gauche du tablier.

En outre, le compartiment moteur reçoit de nombreux équipements dont l'emplacement n'est pas modifié selon que le véhicule est à conduite à gauche ou à droite.

De ce fait, le maître-cylindre et le réservoir qui le surmontent pourraient être montables d'un côté du tablier et ne pas l'être de l'autre, car en ce cas, ils interféreraient avec des éléments structurels latéraux du véhicule, comme, par exemple des réhausses de coupelle du véhicule, un élément structurel transversal du véhicule (du fait d'une inclinaison différente du maître-cylindre d'un côté par rapport à l'autre), comme une traverse, ou des équipements logés dans le compartiment moteur.

Pour remédier à cet inconvénient, plusieurs solutions ont été envisagées en ce qui concerne le réservoir de liquide de frein.

Une première solution consiste à réduire la taille du réservoir. Cette solution n'est pas envisageable, car il est nécessaire de conserver au réservoir un volume minimal de liquide de frein, nécessaire au fonctionnement du système et en particulier au rattrapage de l'usure des plaquettes, puisqu'il est nécessaire de conserver un niveau minimum dans le réservoir afin d'éviter l'introduction de bulles d'air dans le circuit de freinage.

Une deuxième solution consiste à déporter le réservoir de liquide de frein en un autre emplacement du compartiment moteur. Cette conception n'est pas souhaitable, car elle augmente les coûts du système de freinage de par la mise en place de canalisations et de supports nécessaires à ces canalisations et au réservoir. En outre, elle diminue la fiabilité du système, l'augmentation du nombre de conduites étant une source potentielle de fuites au fil du vieillissement du véhicule.

Une troisième solution, généralement retenue, consiste à développer un réservoir de liquide de frein spécifique à chaque version du véhicule. Toutefois, le développement d'un réservoir de liquide de frein entraîne des coûts de développement très importants, tant en développement, qu'en outillage et en industrialisation.

Il existe donc un réel besoin pour un réservoir pouvant être monté sur le maître-cylindre quel que soit le côté de montage de celui-ci sur le tablier du véhicule.

### Résumé de l'invention

L'invention satisfait à ce besoin en proposant un réservoir n'interférant pas avec son environnement quel que soit le côté de son montage sur le tablier du véhicule.

Dans ce but, l'invention propose un sous-ensemble technique de véhicule automobile comportant au moins :
- un compartiment moteur, délimité par deux longerons longitudinaux et un tablier sensiblement vertical qui s'étend transversalement entre les longerons,
- un maître-cylindre de freinage, fixé au tablier d'un côté ou de l'autre par rapport à un plan médian longitudinal du compartiment, ledit maître-cylindre étant surmonté d'un réservoir,
   ledit réservoir étant apte à être agencé :
   selon une première configuration dans laquelle le maître-cylindre est fixé d'un premier côté du plan médian, à proximité d'un élément structurel latéral du compartiment, à proximité d'au moins un élément structurel transversal du compartiment et à proximité d'au moins un premier équipement du compartiment moteur spécifique audit premier côté, et
   selon une seconde configuration dans laquelle le maître-cylindre est fixé d'un second côté du plan médian, à proximité d'un autre élément structurel latéral du compartiment, à proximité de l'élément structurel transversal et à proximité d'au moins un deuxième équipement du compartiment moteur spécifique audit second côté, caractérisé en ce que le réservoir comporte au moins des parois de formes déterminées, dont chacune est configurée pour être agencée selon au moins un jeu minimal déterminé à distance :
      - desdits éléments structurels latéral et transversal,
      - de l'au moins un premier équipement dans la première configuration,
      - de l'au moins un deuxième équipement dans la seconde configuration.

L'invention permet donc avantageusement de proposer un réservoir unique apte à équiper un maître-cylindre de véhicule automobile quel que soit le côté de son montage sur le tablier du véhicule. Les formes des parois du réservoir permettent de conserver un jeu suffisant avec les éléments rigides de l'environnement du maître-cylindre tels que des éléments structurels ou des équipements du compartiment moteur pour éviter tout risque d'interférence et de dégradation du réservoir.

Elles permettent aussi le passage et le maintien d'éléments souples de l'environnement du maître-cylindre à proximité immédiate de celui-ci.

Selon d'autres caractéristiques de l'invention :
- au moins une des desdites parois de formes déterminées est pour résister au contact direct avec un desdits premier ou deuxième équipements,
- au moins une des desdites parois de formes déterminées supporter un élément de fixation d'un desdits premier ou deuxième équipements.

Avantageusement certaines des parois déterminées permettent le passage et le maintien d'éléments souples de l'environnement du maître-cylindre à proximité immédiate de celui-ci.

Selon d'autres caractéristiques de l'invention :
- les éléments structurels latéraux sont chacun porté par un longeron agencé d'un côté du plan médian,
- ledit au moins un jeu minimal déterminé s'étend suivant une direction longitudinale, verticale ou transversale, à distance des desdits éléments structurels latéral et transversal ou à distance d'un des premier et deuxième équipements du compartiment moteur spécifique audit premier ou second côté,
- ledit au moins un jeu minimal déterminé suivant les directions longitudinale et verticale est supérieur d'une valeur déterminée audit au moins un jeu minimal suivant la direction transversale,
- la valeur déterminée est égale à une déformation maximale du tablier suivant les directions longitudinale et verticale lors d'un freinage,
- l'élément structurel latéral comporte une réhausse de coupelle d'amortisseur portée par le longeron associé au côté du compartiment moteur,
- l'élément structurel transversal comporte une traverse transversale de renfort du tablier et/ou un capot fermant le compartiment moteur,
- l'au moins un premier équipement du compartiment moteur spécifiques au premier côté du tablier comporte une nappe d'un faisceau électrique du véhicule agencée d'un côté et au-dessus du réservoir,
- les moyens de fixation comportent un chan de tôle permettant la fixation de ladite nappe sur le côté du réservoir,
- l'au moins un deuxième équipement du compartiment moteur spécifiques au second côté du tablier comporte une batterie et un chargeur agencés transversalement de part et d'autre du réservoir,
- le premier côté est le côté droit et le second côté est le côté gauche, le réservoir comportant une paroi latérale droite verticale sensiblement plane, qui est agencée selon un premier jeu minimal transversal déterminé à distance d'une réhausse de coupelle droite d'amortisseur lorsque le maître-cylindre est fixé du côté droit du plan médian et qui est agencée selon un deuxième jeu déterminé à distance d'un chargeur de batterie du véhicule lorsque le maître-cylindre est fixé du côté gauche du plan médian,
- le réservoir comporte une paroi latérale gauche formée d'une succession de tronçons de parois distants de manière croissante de la paroi latérale droite d'avant en arrière du réservoir, qui est agencée selon un deuxième jeu minimal transversal déterminé à distance d'une batterie du véhicule lorsque le maître-cylindre est fixé du côté gauche du plan médian, un tronçon d'extrémité arrière comportant une patte de fixation horizontale en saillie du chan de tôle,
- le réservoir forme un premier angle avec la direction horizontale lorsqu'il est monté du côté droit du plan médian et un second angle lorsqu'il est monté du côté gauche du plan médian,
- chaque paroi latérale est translucide et comporte au moins un marquage triangulaire avant et un marquage triangulaire arrière ayant des sommets supérieurs respectifs indicateurs d'un niveau de liquide de frein dans le réservoir, chaque marquage étant associé à la lecture d'un niveau associé à un des angles correspondant audit côté de montage,
- le réservoir comporte une paroi supérieure formée d'une succession de tronçons de hauteur décroissante d'avant en arrière, comprenant successivement un tronçon avant portant un bouchon de remplissage agencé avec un troisième jeu minimal vertical à distance du capot, un tronçon intermédiaire comportant une découpe qui est agencée selon un quatrième jeu minimal vertical à distance de la traverse transversale de renfort du tablier, et un tronçon arrière comportant une surépaisseur résistant au contact direct avec la nappe,
- le réservoir comporte une paroi inférieure formée d'une succession de tronçons de hauteur décroissante d'avant en arrière, le tronçon arrière étant verticalement plus éloigné des sommets des marquages triangulaires arrière que le tronçon avant ne l'est des sommets des marquages triangulaires avants afin de minimiser le volume de liquide de frein à l'avant du réservoir,
- chaque jeu minimal transversal est de 10 mm et chaque jeu minimal longitudinal ou vertical est de 12mm,
- le réservoir comporte une paroi avant qui est agencée selon un jeu longitudinal déterminé du chargeur lorsque le maître-cylindre est fixé du côté gauche du plan médian.

L'invention concerne enfin un véhicule automobile comportant un sous-ensemble technique selon l'invention.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig. 1] La figure 1 est une vue de face selon la direction axiale d'un sous-ensemble technique selon l'invention, vu du compartiment moteur, et de deux positions pouvant être occupées par un maître-cylindre ;
[Fig. 2] La figure 2 est une vue de face selon la direction axiale d'un tablier du compartiment moteur du sous-ensemble technique de la figure 1, vu de l'habitacle du véhicule, configuré pour un poste de conduite à gauche ;
[Fig. 3] La figure 3 est une vue en coupe axiale par le plan 3-3 de la figure 1 d'un sous-ensemble technique selon l'invention configuré pour le poste de conduite à gauche ;
[Fig. 4] La figure 4 est une première vue de dessus d'un sous-ensemble technique selon l'invention configuré pour le poste de conduite à gauche ;
[Fig. 5] La figure 5 est une deuxième vue de dessus d'un sous-ensemble technique selon l'invention configuré pour le poste de conduite à gauche ;
[Fig. 6] La figure 6 est une vue de face selon la direction axiale d'un tablier du compartiment moteur du sous-ensemble technique de la figure 1, vu de l'habitacle du véhicule, configuré pour un poste de conduite à droite ;
[Fig. 7] La figure 7 est une première vue en perspective d'un maître-cylindre selon l'invention, monté sur le tablier pour le poste de conduite à droite ;
[Fig. 8] La figure 8 est une deuxième vue en perspective d'un maître-cylindre selon l'invention, monté sur le tablier pour le poste de conduite à droite ;
[Fig. 9] La figure 9 est une troisième vue en perspective d'un maître-cylindre selon l'invention, monté sur le tablier pour le poste de conduite à droite ;
[Fig. 10] La figure 10 est une vue de dessus d'un sous-ensemble technique selon l'invention configuré pour le poste de conduite à droite ;
[Fig. 11] La figure 11 est une vue en coupe axiale par le plan 11-11 de la figure 1 d'un sous-ensemble technique selon l'invention configuré pour le poste de conduite à droite.

### Description détaillée de l'invention

Dans la description qui va suivre, des chiffres de référence identiques désignent des pièces identiques ou ayant des fonctions similaires.

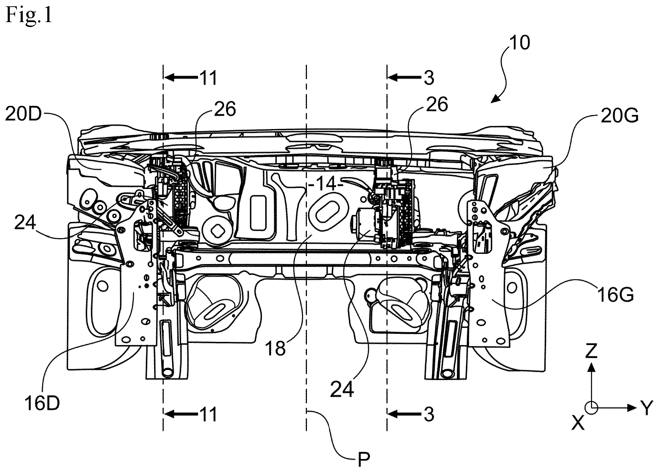

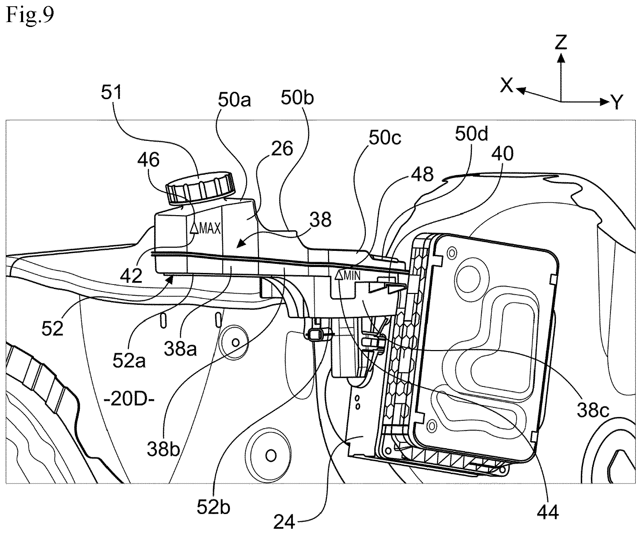

On a représenté sur les figures 1 à 11 un sous-ensemble technique 10 selon l'invention. Le sous-ensemble sera décrit en références aux directions du trièdre "X", "Y", "Z", ou "X" désigne la direction longitudinale, "Y" désigne la direction transversale et "Z" désigne la direction verticale.

Classiquement, ce sous-ensemble technique de véhicule automobile 10 comporte au moins un compartiment moteur 14 et un maître-cylindre 24. Le compartiment moteur 14 fait partie d'une structure de caisse du véhicule qui est connue en soi et ne fait pas l'objet de la présente description. De manière connue, le compartiment moteur 14 est délimité par deux longerons longitudinaux, à savoir un longeron longitudinal droite 16D et un longeron longitudinal gauche 16G. Un tablier 18 sensiblement vertical s'étend transversalement entre les deux longerons 16D et 16G.

Le sous-ensemble technique 10 au sens de l'invention comporte également un maître-cylindre de freinage 24, qui, selon que le véhicule est un véhicule à conduite à droite, c'est-à-dire avec un poste de conduite à gauche, ou à conduite à gauche, c'est-à-dire avec un poste de conduite à droite, est fixée du côté gauche ou du côté droit du tablier 18 véhicule, d'un côté ou de l'autre par rapport à un plan médian longitudinal P du compartiment 14. Ce maître-cylindre 24 est surmonté d'un réservoir 26.

Sur la figure 1, on a représenté le positionnement du maître-cylindre 24 surmonté de son réservoir 26 aux deux emplacements possibles droite et gauche sur le tablier 18 du véhicule, étant entendu que selon la configuration du véhicule, le maître-cylindre 24 n'occupe qu'un seul des deux emplacements.

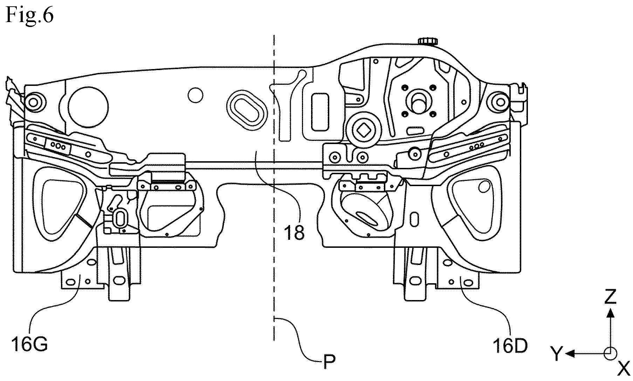

Ainsi, selon une première configuration qui a été représentée aux figures 6 à 11, le maître-cylindre 24 est fixé d'un premier côté du plan médian P, en l'occurrence le côté droit, à proximité d'un élément structurel latéral 20D du compartiment 14, à proximité d'un élément structurel transversal 22 du compartiment 14, et à proximité d'au moins un premier équipement 28 du compartiment moteur 14 qui est spécifique à ce premier côté droit.

L'élément structurel latéral droit 20D est porté par le longeron latéral droit 16D, d'un premier côté du plan médian P.

En particulier, le longeron 16D porte une réhausse de coupelle d'amortisseur correspondante 20D, qui constitue ici l'élément structurel latéral 20D précédemment évoqué. Par ailleurs une traverse 22, formant ici l'élément structurel transversal 22, surmonte le tablier 18 et s'étend transversalement dans une partie supérieure du compartiment moteur 14. Cette traverse renforce, notamment une baie de pare-brise du véhicule (non représentée).

Bien entendu, il sera compris que cette configuration n'est pas limitative de l'invention et que l'élément structurel transversal 22 n'est pas limité à la traverse 22, mais pourrait être constitué de tout élément transversal pouvant être agencé à proximité immédiate du maître-cylindre 24, comme un capot (non représenté) fermant le compartiment moteur 14 du véhicule.

Le premier équipement 28 du compartiment moteur 14 qui est spécifique au premier côté droit du tablier 18 comporte par exemple une nappe 28 d'un faisceau électrique du véhicule agencée d'un côté et au-dessus du réservoir 26, cette nappe 28 courant sous la traverse 22.

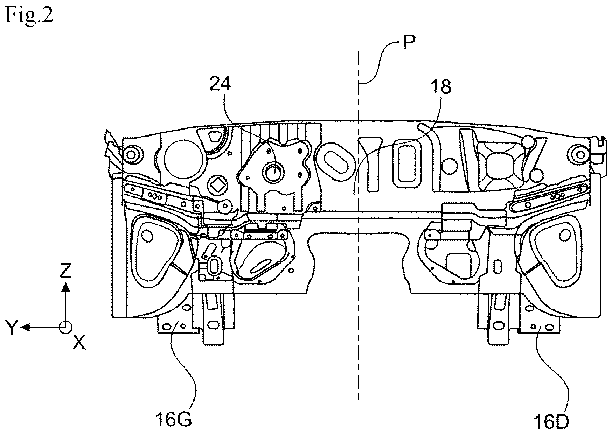

Selon une seconde configuration qui a été représentée aux figures 2 à 5, le maître-cylindre 24 est fixé d'un second côté du plan médian P, en l'occurrence le côté gauche, à proximité d'un élément structurel latéral 20G du compartiment 14, à proximité d'au moins de l'élément structurel transversal 22 du compartiment 14 et à proximité d'au moins un second équipement 30, 32 du compartiment moteur 14 qui est spécifique à ce second côté gauche.

L'élément structurel latéral gauche 20G est porté par le longeron latéral gauche 16G, d'un second côté du plan médian P.

Ainsi, de la même manière, le longeron 16G porte lui aussi une réhausse de coupelle d'amortisseur correspondante 20G, qui constitue ici l'élément structurel latéral 20G précédemment évoqué. L'élément structurel transversal 22, quant à lui, surmonte toujours le tablier 18 à proximité du maître-cylindre 24.

Bien entendu, il sera compris que cette configuration n'est pas limitative de l'invention et que le compartiment moteur 14 pourrait comporter d'autres éléments structurels latéraux autres que les réhausses 20D, 20G de coupelles d'amortisseurs.

Les équipements 30, 32 du compartiment moteur 14 spécifiques au second côté du tablier gauche comportent une batterie 30 et un chargeur 32 qui sont agencés transversalement de part et d'autre du réservoir 26.

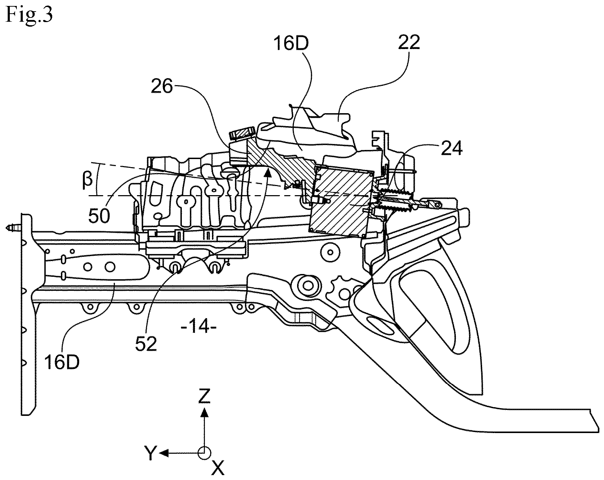

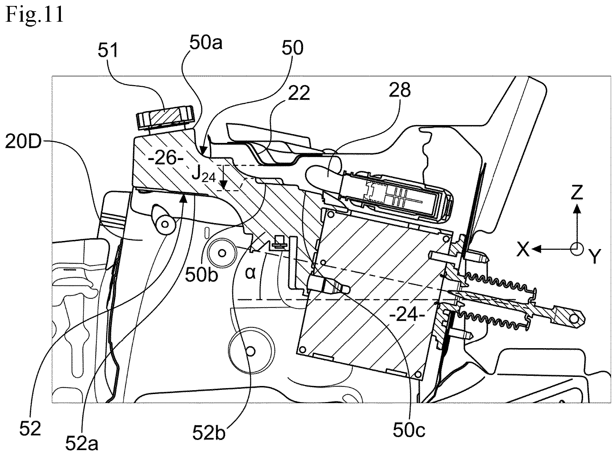

Par ailleurs, comme on peut le voir sur les figures 3 et 11, le maître-cylindre 24 ne forme pas nécessairement le même angle avec la direction horizontale X selon qu'il est monté à droite ou à gauche du plan médian P, puisque la paroi du tablier ne forme elle-même pas le même angle avec cette direction X. Ainsi, dans le cas du montage avec poste de conduite à droite comme représenté à la figure 11, le maître-cylindre 24 forme un angle α avec la direction horizontale X, tandis que dans le cas du montage avec poste de conduite à gauche comme représenté à la figure trois, le maître-cylindre 24 forme un angle β avec la direction horizontale X.

Dans l'exemple qui a été représenté ici, et de manière non limitative de l'invention, la différence entre les angles α et β peut être d'environ 9°.

Conformément à l'invention, le réservoir 26 comporte au moins des parois 36, 38, 50, 54 de formes déterminées, dont chacune est configurée pour être agencée selon au moins un jeu minimal J_{X1}, J_{Y1}, J_{Y2}, J_{Y3}, J_{Z1} déterminé à distance :
- des desdits éléments structurels latéral 20D, 20G et transversal 22,
- de l'au moins un premier équipement 28, dans la première configuration,
- de l'au moins un deuxième équipement (30, 32) dans la seconde configuration,

D'une manière générale, le jeu minimal J_{X1}, J_{Y1}, J_{Y2}, J_{Y3}, J_{Z1} n'est pas limité à une seule direction. Ainsi, dans le cas présent, le jeu minimal déterminé peut s'étendre suivant une direction longitudinale, verticale ou transversale, à distance des desdits éléments structurels latéral 20D, 20G et transversal 22 ou à distance d'un des premier et deuxième équipements 28, 30, 32 du compartiment moteur 14 spécifique audit premier ou second côté.

Ainsi, en se référant au trièdre X,Y,Z, le jeu minimal déterminé sera considéré suivant ces trois directions et sera nommé respectivement J_{X1} selon la direction X, J_{Y1}, J_{Y2}, J_{Y3} selon la direction Y, et J_{Z1} selon la direction Z.

D'une manière générale, dans chacun des deux types de montage droit ou gauche, le jeu minimal J_{X1}, J_{Y1}, J_{Y2}, J_{Y3}, J_{Z1} est destiné à éviter toute interférence entre le réservoir 26 et l'un des desdits éléments structurels latéral 20D, 20G et transversal 22 ou avec l'un des premier et deuxième équipements 30, 32. Aussi est-il important de tenir compte pour l'établissement de ce jeu des conditions de fonctionnement dynamique du sous-ensemble 10. En effet, le maître-cylindre 24 est plus sujet à des déplacements importants suivant les directions longitudinale X et verticale Z que suivant la direction transversale Y. Ceci est dû au fait que le tablier 18 est susceptible de se déformer élastiquement précisément suivant ces directions longitudinales X et verticale Z lorsqu'un effort de freinage d'intensité élevée est exercé sur le maître-cylindre 24.

C'est pourquoi, dans le cadre de la présente invention, le jeu minimal J_{X1}, J_{Z1} suivant les directions longitudinale et verticale est supérieur d'une valeur déterminée audit au moins un jeu minimal J_{Y1}, J_{Y2}, J_{Y3} suivant la direction transversale. Cette valeur déterminée est donc égale à une déformation maximale du tablier suivant les directions longitudinale X et verticale Z lors d'un freinage.

À titre d'exemple, et de manière non limitative de l'invention, chaque jeu minimal transversal J_{Y1}, J_{Y2}, J_{Y3} est de 10 mm et chaque jeu minimal longitudinal J_{X1} ou vertical J_{Z1} est de 12mm.

Par ailleurs au moins une desdites parois 38 de formes déterminées est configurée pour supporter un élément 34 de fixation d'un desdits premier ou deuxième équipements 28.

On va à présent décrire plus en détail les formes des parois du réservoir 26 en relation avec chaque élément structurel latéral 20D, 20G et transversal 22, et avec les premiers et deuxièmes équipements 28, 30, 32.

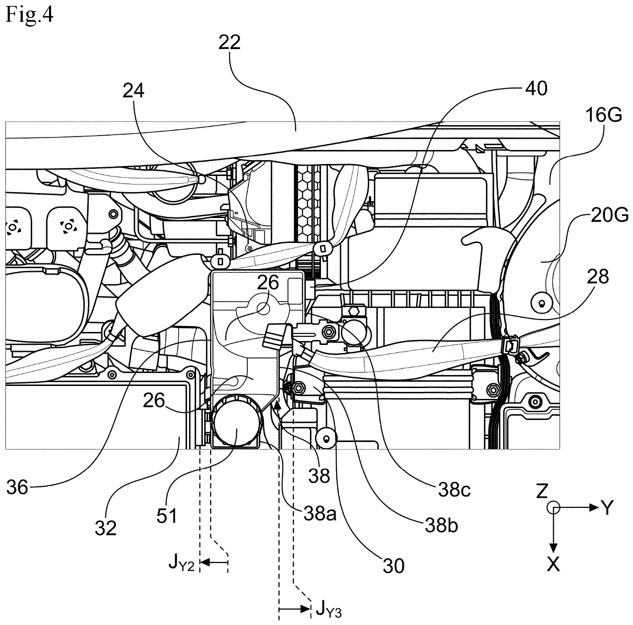

Comme on l'a vu précédemment, les éléments structurels latéraux 20D et 20G sont constitués ici de réhausses de coupelles d'amortisseur 20D et 20G. L'élément structurel transversal 22 est une traverse surmontant le tablier 18. Le compartiment moteur 14 comporte un premier équipement 28 constitué de la nappe 28 du faisceau électrique. Comme on peut le voir sur les figures 4, 5 et 11, la nappe 28 traverse transversalement le compartiment moteur 14. Toutefois, c'est seulement du côté droit du compartiment moteur 14 qu'elle est agencée à proximité du réservoir 26 lorsque le maître-cylindre 24 est monté du côté droit.

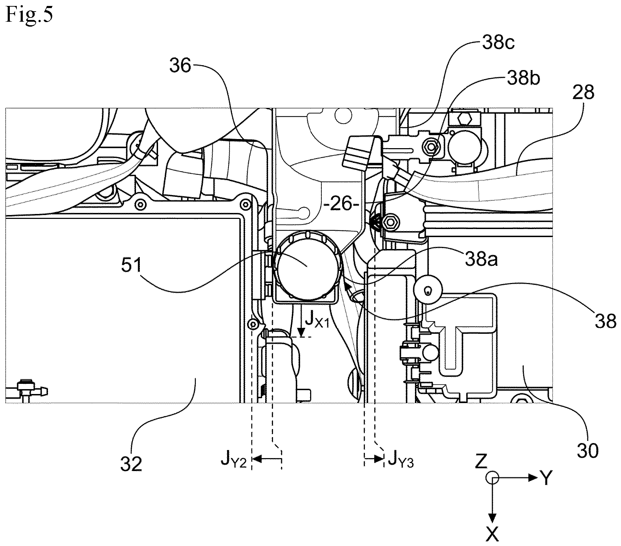

Comme l'illustrent les figures 4 et 5, le compartiment moteur 14 comporte aussi deux deuxièmes équipements 30, 32 constitués respectivement d'une batterie 30 et d'un chargeur de batterie 32. Cette batterie 30 et ce chargeur de batterie 32 sont spécifiquement agencés du côté gauche du compartiment moteur 14, ils sont agencés transversalement de part et d'autre du réservoir 26 lorsque le maître-cylindre 24 est monté du côté gauche.

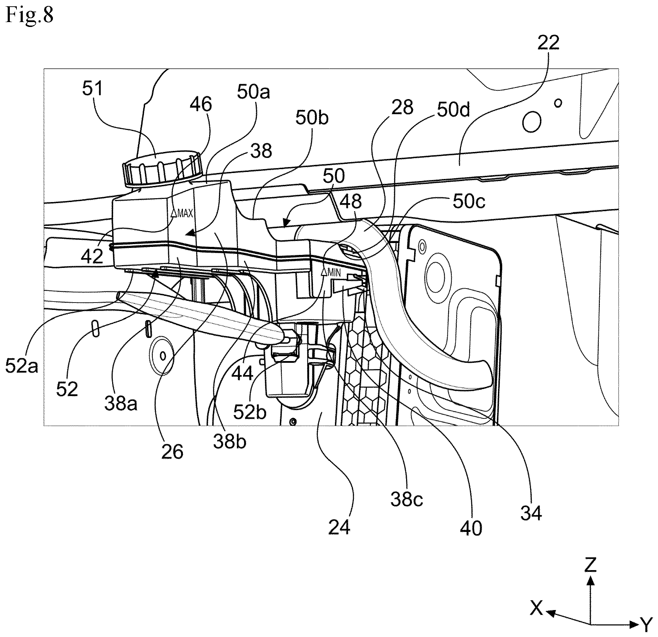

Enfin, comme l'illustre la figure 8, l'élément 34 de fixation est constitué d'un chan de tôle 34 permettant la fixation de la nappe 28 sur le côté du réservoir 26. Il sera donc compris que ce chan de tôle 34 est fixé sur le côté du réservoir 26 lorsque la nappe 28 est agencée à proximité du réservoir 26, c'est-à-dire lorsque le maître-cylindre 24 et le réservoir 26 sont montés du côté droit du compartiment moteur 14.

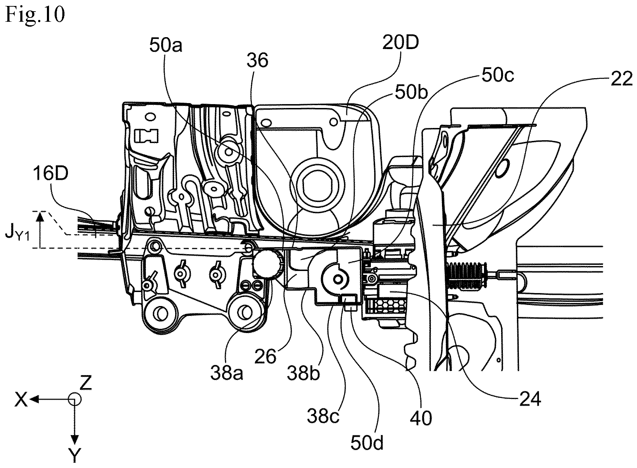

Comme l'illustre la figure 10, le réservoir 26 comporte une paroi latérale droite 36 verticale sensiblement plane, qui est agencée selon un premier jeu minimal J_{Y1} transversal déterminé à distance de la réhausse de coupelle droite d'amortisseur 20D lorsque le maître-cylindre 24 est fixé du côté droit du plan médian P.

Comme l'illustrent les figures 4 et 5, la même paroi latérale droite verticale 36 est agencée selon un deuxième jeu déterminé J_{Y2} à distance du chargeur 32 de batterie du véhicule lorsque le maître-cylindre 24 est fixé du côté gauche du plan médian P.

Ainsi la paroi latérale droite verticale 36 peut-elle satisfaire à deux conditions de respect de jeu transversal.

De la même manière, comme l'illustrent les figures 4, 5 et 7 à 9, le réservoir 26 comporte une paroi latérale verticale gauche 38 formée d'une succession de tronçons de parois 38a, 38b 38c étagés, distants de manière croissante de la paroi latérale droite 36 d'avant en arrière du réservoir. La paroi 38 est agencée selon un deuxième jeu minimal transversal déterminé J_{Y3} à distance de la batterie 30 véhicule lorsque le maître-cylindre 24 est fixé du côté gauche du plan médian P. Sur les figures 4 et 5 ce jeu J_{Y3} est minimal entre le deuxième tronçon et la batterie 30, mais il sera compris que cette configuration n'est pas limitative de l'invention et que le jeu J_{Y3} pourrait être minimal en regard d'un autre tronçon de la paroi 38.

Le tronçon d'extrémité arrière 38c comporte une outre une patte de fixation horizontale 40 en saillie du tronçon 38c. Cette patte 40 en saillie est destinée, lorsque le maître-cylindre 24 est fixé du côté droit du plan médian P, à permettre la fixation du chan de tôle 34, comme représenté à la figure 8.

Comme on l'a vu précédemment, selon le côté du tablier 18 où le maître-cylindre 24 est fixé, celui-ci présente un angle différent α ou β par rapport à l'horizontale, c'est-à-dire par rapport à la direction axiale X. Par ailleurs, les réservoirs 26 de tous les véhicules européens et asiatiques sont translucides afin de pouvoir effectuer une mesure du niveau de liquide de frein dans ceux-ci.

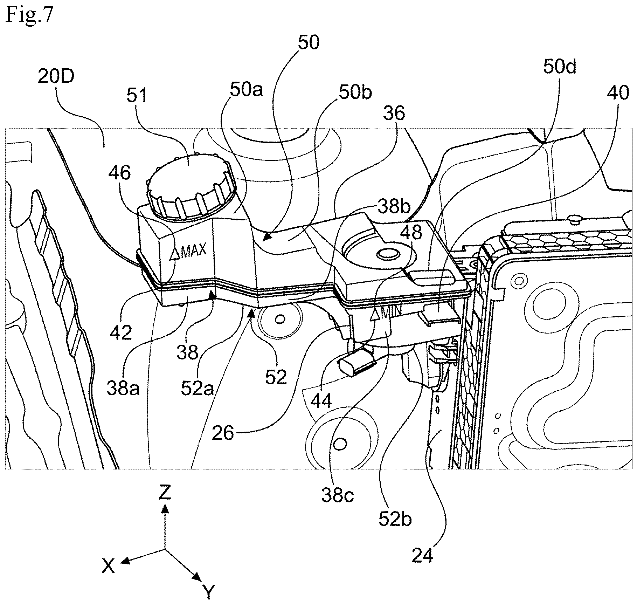

De ce fait, il n'est pas possible d'utiliser sur un tel réservoir 26 des indicateurs de niveau conventionnels réalisés sous la forme de moulures sur les parois latérales 36 ou 38. Aussi, avantageusement, comme l'illustrent les figures 7 à 9, chaque paroi latérale 36, 38 translucide et comporte au moins un marquage triangulaire avant 42 et un marquage triangulaire arrière 44 ayant des sommets supérieurs 46, 48 respectifs qui forment un indicateur d'un niveau de liquide de frein dans le réservoir 26. Selon le côté du tablier 18 où le réservoir 26 est monté, celui-ci forme comme on l'a vu un angle α ou β avec la direction axiale X. De ce fait, c'est l'un ou l'autre des marquages triangulaires avant ou arrière, droite ou gauche 42, 44 qui sera utilisé spécifiquement d'un côté ou de l'autre, celui-ci étant par exemple peint d'une manière spécifique selon le côté de montage du maître-cylindre 24. Chaque marquage 46, 48 est associé à la lecture d'un niveau associé au montage selon un des angles α, β correspondant audit côté de montage. La lecture du niveau s'effectue sur le sommet supérieur 46, 48 correspondant.

De la même manière que pour les parois latérales 36, 38, le réservoir 26 comporte une paroi supérieure 50 et paroi inférieure 52 adaptées à leur environnement. Ainsi, le réservoir 26 comporte une paroi supérieure 50 qui est formée d'une succession de tronçons 50a, 50b, 50c étagés de hauteur décroissante d'avant en arrière.

Le tronçon avant 50a porte un bouchon de remplissage agencé avec un troisième jeu minimal vertical (non représenté) à distance du capot du véhicule (non représenté). Un tronçon intermédiaire 50b comporte une découpe qui est agencée selon un quatrième jeu minimal vertical J_{Z1} à distance de la traverse transversale 22 de renfort du tablier 18, comme représenté à la figure 11. Enfin, un tronçon arrière 50c comporte une surépaisseur 50d qui est résistante au contact direct avec la nappe 28, comme représenté aux figures 7, 8 et 10.

À l'opposé, comme l'illustre 8, 9, et 11 le réservoir 26 comporte une paroi inférieure 52 formée d'une succession de deux tronçons 52a, 52b étagés de hauteur décroissante, d'avant en arrière. Bien entendu, la paroi inférieure 52 pourrait comporter un nombre supérieur de tronçons.

De chaque côté du réservoir 26, le tronçon arrière 52b est verticalement plus éloigné des sommets 48 des marquages triangulaires arrière 44 que le tronçon avant 52a ne l'est des sommets 46 des marquages triangulaires avants 42 afin de minimiser le volume de liquide de frein à l'avant du réservoir 26. En effet, s'il est nécessaire de conserver un volume minimum de liquide de frein dans le réservoir permettant de compenser les variations de niveau dans le circuit de freinage à mesure que les garnitures de freinage s'usent, il n'est pour autant pas nécessaire de maximiser le volume de liquide de frein utilisé.

Enfin, comme l'illustre la figure 5, le réservoir 26 comporte une paroi avant 54 qui est agencée avec un jeu longitudinal J_{X1} minimal du chargeur de batterie 32 du véhicule lorsque le maître-cylindre 26 est fixé du côté gauche du plan médian P.

L'invention propose un sous-ensemble technique 10 de véhicules automobile dont le maître-cylindre 24 comporte un réservoir 26 permettant le montage de celui-ci d'un côté comme de l'autre du tablier 18, ce qui permet de rationaliser les coûts de fabrication des versions pour conduite à droite et conduite à gauche d'un même type de véhicule, d'une manière simple et efficace.

L'invention propose donc aussi un véhicule automobile équipé d'un tel sous-ensemble technique 10.

## Revendications

1. Sous-ensemble technique (10) de véhicule automobile comportant au moins :
- un compartiment moteur (14), délimité par deux longerons longitudinaux (16D, 16G) et un tablier (18) sensiblement vertical (18) qui s'étend transversalement entre les longerons (16D, 16G),
- un maître-cylindre de freinage (24), fixé au tablier (18) d'un côté ou de l'autre par rapport à un plan (P) médian longitudinal du compartiment, ledit maître-cylindre (24) étant surmonté d'un réservoir (26),
ledit réservoir (26) étant apte à être agencé :
selon une première configuration dans laquelle le maître-cylindre (24) est fixé d'un premier côté du plan médian, à proximité d'un élément structurel latéral (20D) du compartiment (14), à proximité d'au moins un élément structurel transversal (22) du compartiment (14) et à proximité d'au moins un premier équipement (28) du compartiment moteur (14) spécifique audit premier côté, et
selon une seconde configuration dans laquelle le maître-cylindre (24) est fixé d'un second côté du plan médian (P), à proximité d'un autre élément structurel latéral (20G) du compartiment (14), à proximité de l'élément structurel transversal (22) et à proximité d'au moins un deuxième équipement (30, 32) du compartiment moteur (14) spécifique audit second côté,
**caractérisé en ce que** le réservoir (26) comporte au moins des parois (36, 38, 50, 54) de formes déterminées, dont chacune est configurée pour être agencée selon au moins un jeu minimal (J_{X1}, J_{Y1}, J_{Y2}, J_{Y3}, J_{Z1}) déterminé à distance :
- desdits éléments structurels latéral (20D, 20G) et transversal (22),
- de l'au moins un premier équipement (28), dans la première configuration,
- de l'au moins un deuxième équipement (30, 32) dans la seconde configuration.

2. Sous-ensemble technique (10) de véhicule automobile selon la revendication précédente, **caractérisé en ce que** au moins une desdites parois (38) de formes déterminées est configurée pour supporter un élément (34) de fixation d'un desdits premier ou deuxième équipements (28).

3. Sous-ensemble technique (10) de véhicule automobile selon la revendication précédente, **caractérisé en ce que** les éléments structurels latéraux (20D, 20G) sont chacun portés par un longeron (16D, 16G) agencé d'un côté du plan médian (P).

4. Sous-ensemble technique (10) selon l'une des revendications précédentes, **caractérisé en ce que** :
- ledit au moins un jeu minimal déterminé (J_{X1}, J_{Y1}, J_{Y2}, J_{Y3}, J_{Z1}) s'étend suivant une direction longitudinale (X), verticale (Z) ou transversale (Y), à distance des desdits éléments structurels latéral (20D, 20G) et transversal (22) ou à distance d'un des premier et deuxième équipements (28, 30, 32) du compartiment moteur (10) spécifique audit premier ou second côté,
- ledit au moins un jeu minimal déterminé (J_{X1}, J_{Z1}) suivant les directions longitudinale (X) et verticale (Z) est supérieur d'une valeur déterminée audit au moins un jeu minimal déterminé ( J_{Y1}, J_{Y2}, J_{Y3}) suivant la direction transversale (Y).

5. Sous-ensemble technique (10) selon la revendication précédente, **caractérisé en ce que** la valeur déterminée est égale à une déformation maximale du tablier (18) suivant les directions longitudinale (X) et verticale (Z) lors d'un freinage.

6. Sous-ensemble technique (10) selon l'une des revendications précédentes, **caractérisé en ce que** :
- l'élément structurel latéral (20D, 20G) comporte une réhausse de coupelle d'amortisseur portée par le longeron (16D, 16G) associé au côté du compartiment moteur (14),
- l'élément structurel transversal (22) comporte une traverse transversale de renfort du tablier (18) et/ou un capot fermant le compartiment moteur (14),
- l'au moins un premier équipement (28) du compartiment moteur (14) spécifique au premier côté du tablier comportent une nappe (28) d'un faisceau électrique du véhicule agencée d'un côté et au-dessus du réservoir (26),
- l'élément de fixation (34) comporte un chan de tôle (34) permettant la fixation de ladite nappe (26) sur le côté du réservoir (26), et
- l'au moins un deuxième équipement (30, 32) du compartiment moteur spécifiques au second côté du tablier comportent une batterie (30) et un chargeur (32) agencés transversalement de part et d'autre du réservoir (26).

7. Sous-ensemble technique (10) selon la revendication 6, **caractérisé en ce que** le premier côté est le côté droit et le second côté est le côté gauche, le réservoir (28) comportant une paroi latérale droite verticale sensiblement plane (36), qui est agencée selon une premier jeu minimal transversal déterminé (J_{Y1}) à distance d'une réhausse (20D) de coupelle droite d'amortisseur lorsque le maître-cylindre est fixé du côté droit du plan médian (P) et qui est agencée selon une deuxième jeu minimal déterminé (J_{Y2}) à distance d'un chargeur de batterie (32) du véhicule lorsque le maître-cylindre (24) est fixé du côté gauche du plan médian (P).

8. Sous-ensemble technique (10) selon la revendication précédente, **caractérisé en ce que** le réservoir comporte une paroi latérale gauche (38) formée d'une succession de tronçons de parois (38a, 38b, 38c) distants de manière croissante de la paroi latérale droite verticale (36) d'avant en arrière du réservoir (26), qui est agencée selon un deuxième jeu minimal transversal déterminé (J_{Y2}) à distance d'une batterie (30) du véhicule lorsque le maître-cylindre (26) est fixé du côté gauche du plan médian (P), un tronçon d'extrémité arrière (38c) comportant une patte (40) de fixation horizontale en saillie du chan de tôle (34) .

9. Sous-ensemble technique (10) selon les revendications 7 et 8 prises en combinaison, **caractérisé en ce que** :
- le réservoir (24) forme un premier angle (α) avec la direction horizontale X lorsqu'il est monté du côté droit du plan médian (P) et un second angle (β) lorsqu'il est monté du côté gauche du plan médian (P),
- chaque paroi latérale (36, 38) est translucide et comporte au moins un marquage triangulaire avant (42) et un marquage triangulaire arrière (44) ayant des sommets supérieurs (46, 48) respectifs indicateurs d'un niveau de liquide de frein dans le réservoir (26), chaque marquage étant associé à la lecture d'un niveau associé à un des angles (α, β) correspondant audit côté de montage.

10. Sous-ensemble (10) technique selon les revendications6 à 9, **caractérisé en ce que** le réservoir (26) comporte une paroi supérieure (50) formée d'une succession de tronçons (50a, 50b, 50c) de hauteur décroissante d'avant en arrière, comprenant successivement un tronçon avant (50a) portant un bouchon de remplissage (51) agencé avec un troisième jeu minimal vertical à distance du capot, un tronçon intermédiaire (50b) comportant une découpe qui est agencée selon un quatrième jeu minimal vertical (J_{Z1}) déterminé à distance de la traverse transversale (22) de renfort du tablier (18), et un tronçon arrière (50c) comportant une surépaisseur (50d) résistant au contact direct avec la nappe (28).

11. Sous-ensemble technique selon l'une des revendications 7 à 9, **caractérisé en ce que** le réservoir comporte une paroi avant (54) qui est agencée selon un jeu longitudinal minimal (J_{X1}) déterminé du chargeur (32) lorsque le maître-cylindre (26) est fixé du côté gauche du plan médian (P).

12. Véhicule automobile comportant un sous-ensemble technique selon l'une des revendications 1 à 11.
